Europäisches Patentamt

European Patent Office

Office européen des brevets

(19)

(11) Numéro de publication: **0 011 014**
**B1**

(12) **FASCICULE DE BREVET EUROPEEN**

(45) Date de publication du fascicule de brevet:
05.05.82

(51) Int. Cl.³: **H 04 L 1/10, H 04 L 1/24**

(21) Numéro de dépôt: **79400771.6**

(22) Date de dépôt: **19.10.79**

(54) **Dispositif de mesure de la qualité d'une liaison numérique et équipements de transmission comportant un tel dispositif.**

(30) Priorité: **31.10.78 FR 7830848**

(43) Date de publication de la demande:
**14.05.80 Bulletin 80/10**

(45) Mention de la délivrance du brevet:
**05.05.82 Bulletin 82/18**

(84) Etats contractants désignés:
**DE GB IT NL**

(56) Documents cités:
**US-A-2 689 950**

(73) Titulaire: **THOMSON-CSF, 173, Boulevard Haussmann, F-75360 Paris Cedex 08 (FR)**

(72) Inventeur: **Bursztejn, Jacques, "THOMSON-CSF" - SCPI 173, bld Haussmann, F-75360 Paris Cedex 08 (FR)**

(74) Mandataire: **Courtellemont, Alain et al, "THOMSON-CSF" - SCPI 173, bld Haussmann, F-75360 Paris Cedex 08 (FR)**

## Dispositif de mesure de la qualité d'une liaison numérique et équipements de transmission comportant un tel dispositif

La présente invention concerne les dispositifs de contrôle en exploitation de la qualité des liaisons numériques par évaluation périodique de la parité de séquences d'un nombre de bits prédéterminé.

Il est connu d'exercer le contrôle de la qualité de la transmission d'un train numérique sans redondance en calculant à l'émission la parité de séquences de n bits successifs. On dispose ainsi d'une information de parité tous les n bits qui est transmise au récepteur de la liaison, lequel effectue le calcul de la parité sur les mêmes séquences et on compare le résultat avec l'information de parité reçue, d'où une appréciation de la qualité de la transmission sous forme d'un taux d'erreur qui sert de critère, en particulier, pour provoquer la commutation d'équipements lorsque ce taux est supérieur à une valeur fixée par avance.

La mise en oeuvre de cette disposition exige le transmission d'une référence de temps déterminant le début du calcul de parité, afin qu'il soit simultané à l'émission et à la réception.

Dans ce but des bits supplémentaires sont insérés dans le train numérique émis et le bit de parité est transmis avec l'information.

On profite alors généralement de cette modification de la trame du signal pour y inclure les informations de service nécessaires à l'exploitation.

Mais cette disposition fournit une information de taux d'erreur inutilement fréquente lorsqu'elle est appliquée à des débits binaires importants. Par exemple, pour un débit de 34 Mbits/sec, l'envoi d'un bit de parité tous les $10^4$ bits, ce qui correspond à la détection d'un taux d'erreur limité de $10^{-4}$, représente l'envoi d'une information de parité toutes les 300 µs, alors que le temps de fonctionnement de la commutation d'équipements, qu'une telle information peut commander, demandera de l'ordre de 40 ms.

Et surtout cette disposition entraîne un changement du débit binaire en ligne et l'utilisation de nombreux composants supplémentaires dans les equipements d'où découlent une augmentation de leur consommation, de leur coût, et une diminution de leur fiabilité, tant en ce qui concerne les stations terminales que relais.

L'objet de la présente invention est de pallier ces inconvénients.

Selon l'invention, un dispositif de mesure de la qualité d'une liaison numérique comportant à l'émission et à la réception:

– des moyens générateurs d'un bit de parité pour chaque séquence d'un nombre fixe n de bits successifs d'information à transmettre, n étant un entier positif;

– un dispositif de commande des moyens générateurs, déterminant le début de prise en compte de chaque séquence, et comportant en outre à l'émission, des moyens de transmission des bits de parité et à la réception un detecteur de coïncidence des bits de parité transmis et générés localement, est caractérisé en ce que le dispositif de commande comporte des moyens de reconnaissance pour fournir un signal logique quand les k derniers bits d'information tranmis sont identiques à une séquence de référence composée de k bits, où k est un nombre entier fonction de la fréquence moyenne souhaitée des apparitions aléatoires de ce mot de k bits dans la suite des bits d'informations; et en ce que les moyens de transmission des bits de parité ne modifient pas la séquence des bits d'information.

L'invention sera mieux comprise et d'autres caractéristiques apparaîtront à l'aide de la description ci-après et des dessins s'y rapportant sur lesquels:

la figure 1 est un exemple du dispositif de mesure selon l'invention appliqué aux équipements d'émission d'une liaison numérique;

la figure 2 est un exemple du dispositif de mesure selon l'invention appliqué aux équipements de réception.

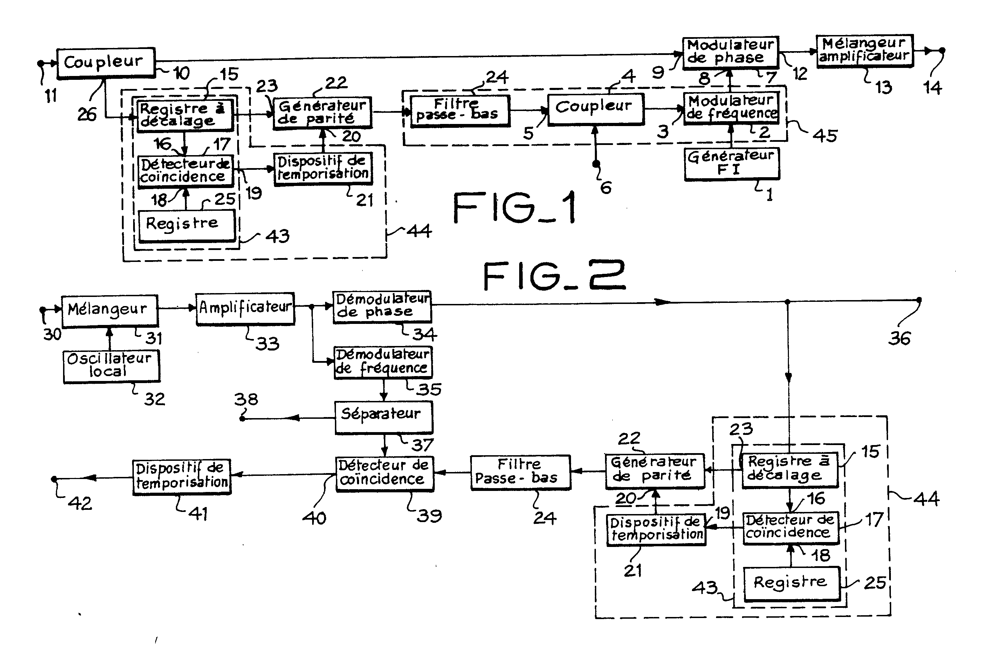

Sur la figure 1, un générateur à fréquence intermédiaire 1 alimente un modulateur de fréquence 2 dont l'entrée de modulation 3 reçoit les signaux appliqués aux bornes d'entrée 5 et 6 d'un coupleur 4. Un modulateur de phase 7 reçoit sur son entrée de signal porteur 8 le signal de sortie du modulateur 2, et sur son entrée de modulation 9 à travers le coupleur 10, le débit binaire d'information à transmettre appliqué à la borne d'entrée 11. La sortie 12 du modulateur 7 est connectée à la sortie 14 de l'émetteur à travers un mélangeur et amplificateur 13, qui transpose la fréquence et fournit la puissance nécessaire à l'émission.

L'ensemble décrit constitue un émetteur classique à modulation de phase par signaux numériques du type comportant la transmission des informations de service, appliquées sur la borne 6 et contenues dans un spectre de fréquence basse, à l'aide du modulateur de fréquence auxiliaire 2 inséré entre le générateur de signal porteur à fréquence intermédiaire 1 et le modulateur de phase principal 7.

Le dispositif selon l'invention comporte des moyens 22 générateurs d'un bit de parité («générateur de «parité» sur la figure) et des moyens 44 de commande, constitués d'un dispositif de temporisation 21 et de moyens 43 de reconnaissance d'une séquence de k bits constitués d'un registre à décalage 15, de 18 étages, connecté à la sortie 26 du coupleur 10, et dont les états de ces 18 étages sont communiqués à une première entrée 16 d'un détecteur de coïncidence 17 recevant sur une seconde entrée 18 les états d'un registre à mémoire à 18 étages, 25, chargés par une suite alternée de 1 et 0 logiques. La sortie 19 du détecteur 17 est connectée à l'entrée de commande 20 des moyens 22, à travers le dispositif de temporisation 21.

Ces moyens 22 reçoivent les bits délivrés à la sortie 23 du registre 15 et fournissent une suite de bits de parité à l'entrée 5 du coupleur 4, à travers le filtre passe bas 24.

Le fonctionnement de ce dispositif est basé sur le principe suivant.

Pour un débit binaire aléatoire, le calcul montre que la probabilité d'avoir une séquence prédéterminée de k bits est $(1/2)^k$, et qu'elle apparaîtra en moyenne, tous les $2^k + k - 1$ bits, c'est-à-dire très sensiblement tous les $2^k$ bits.

Si N est le débit des bits d'information, la fréquece F d'apparition des séquences de k bits sera $F = \dfrac{N}{2^k}$.

Ces séquences tiennent lieu des bits supplémentaires habituellement insérés dans le train numérique pour définir l'instant à partir duquel est calculée la parité d'une quantité déterminée de bits transmis.

Dans l'exemple décrit N vaut 34 m bits/sec, et il est souhaité d'avoir une information de parité au plus toutes les 5 m.sec, donc F < 200 bits/sec d'où le choix de k = 18 qui correspond à une valeur moyenne de F égale à 130 bits/sec. Dans l'intervalle de temps moyen séparant deux séquences successives, il s'écoule donc environ 260.000 bits ce qui permettrait, théoriquement, de déterminer un taux d'erreur de l'ordre de $4 \cdot 10^{-6}$. En fait dans l'exemple décrit on s'est limité à la mesure d'un taux d'erreur de $10^{-4}$ et les moyens 22 fournissent une impulsion chaque fois qu'ils ont compté un nombre pair de bits parmi la suite de n = 10.000 bits qui suit la reconnaissance d'une séquence prédéterminée de k bits par le détecteur de coïncidences 17, sous réserve qu'il n'en ait pas reconnu une, moins de 5 millisecondes plus tôt. Le dispositif de temporisation 21 comporte dans l'exemple choisi une porte logique ET ayant une entrée de signal et une entrée de commande bloquée par une bascule monostable, d'une durée de 5 millisecondes, déclenchée à chaque impulsion reçue du détecteur de coïncidence.

Cette disposition a pour but de maintenir au plus égale à 200 bits/sec la fréquence de récurrence du bit de parité fourni par les moyens 22 et de limiter la dispersion de cette fréquence de récurrence. Le signal de parité est appliqué aux moyens de transmission 45, où il est transformé en une onde sinusoïdale par le filtre passe bas 24, laquelle est transmise, en même temps que les signaux de service appliqués sur la borne 6, par modulation de fréquence de la porteuse de l'émetteur grâce au modulateur 2.

La figure suivante montre comment les signaux transmis sont traités à la réception.

Sur la figure 2, les signaux à haute fréquence, appliqués sur la borne d'entrée 30, et qui ont été émis par l'émetteur précédemment décrit, sont convertis en fréquence intermédiaire par le mélangeur 31 associé à un oscillateur local de transposition 32, et amplifiés par l'amplificateur 33. Ce dernier alimente en parallèle les démodulateurs de phase 34 et de fréquence 35 fournissant respectivement le train binaire d'information sur la borne de sortie 36 et les données de service au séparateur 37. Ce dernier fournit sur une première sortie 38 les informations de service, hormis le signal représentatif de la fréquence des bits de parité, qui est présent sur sa seconde sortie connectée à une prémière entrée d'un détecteur de coïncidence 39 dont la seconde entrée reçoit l'information de parité. Cette dernière est déduite du débit binaire issu du démodulateur 34, à travers une structure identique à celle de la figure 1, avec les mêmes repères 15 à 25.

Les impulsions caractéristiques de la divergence des bits de parité délivrés par la sortie 40 du circuit 39 sont appliquées à un dispositif de temporisation 41 qui fournit une impulsion sur sa sortie 42 chaque fois qu'il reçoit plus de deux divergences dans l'intervalle de temps moyen d'apparition de cinq bits de parité. Le temps moyen de détection d'un défaut θ sera alors donné par

$$\theta = \frac{5 \times 2^k}{N}$$

soit pour N = 34 m bits/sec et k = 18, θ ⧣ 38 ms, temps ou bout duquel l'impulsion fournie sur la borne de sortie 42 déclenchera le processus de commutation.

Le bon fonctionnement du système suppose que le signal d'information transmis soit suffisamment proche d'un signal aléatoire. Pour cela il pourra être utilisé un dispositif brasseur (scrambler en littérature anglo-saxonne) qui multiple le signal par un polynôme donné.

Les convertisseurs cités dans la réalisation multiplie le signal par un polynôme donné. sont pas nécessaires au fonctionnement. Il est évidemment possible d'émettre à partir d'un générateur 1 fournissant le signal à la fréquence d'émission, ce qui entraîne la disparition du convertisseur inclus dans le dispositif 13. De même à la réception, il est possible de remplacer le dispositif superhétérodyne constitué des éléments 31 à 33 par une simple amplification.

Dans l'exemple décrit la séquence de k bits choisie est constituée de bits de valeur alternée. En fait elle peut être quelconque et en particulier constituée de k bits identiques. Dans ce dernier cas, les organes 15, 17 et 25 peuvent être remplacés par exemple par un simple compteur de k bits qui est remis à zéro par la présence de chaque bit de polarité inverse à celle des bits constituant la séquence prédéterminée.

La transmission de l'information de parité peut être effectuée par de nombreux autres moyens connus indépendants du débit binaire d'information, par exemple par modulation en phase du rythme du débit binaire transmis, ou par modulation angulaire de l'oscillateur local du convertisseur inclus dans le dispositif 13.

**Revendications**

1. Dispositif de mesure de la qualité d'une liaison numérique comportant, à l'émission et à la réception:

– des moyens (22) générateurs d'un bit de parité pour chaque séquence d'un nombre fixe n de bits successifs d'information à transmettre, n étant un entier positif,

– un dispositif (44) de commande des moyens générateurs (22), déterminant le début de prise en compte de chaque séquence,

et comportant en outre à l'émission des moyens de transmission des bits de parité (45) et à la réception un détecteur (39) de coïncidence des bits de parité générés localement et des bits de parité transmis, caractérisé en ce que le dispositif de commande (44) comporte des moyens de reconnaissance (43) pour fournir un signal logique quand les k derniers bits d'information transmis sont identiques à une séquence de référence composée de k bits, où k est un nombre entier fonction de la fréquence moyenne souhaitée des apparitions aléatoires de ce mot de k bits dans la suite des bits d'information; et en ce que les moyens de transmission (45) des bits de parité ne modifient pas la séquence des bits d'information.

2. Dispositif de mesure selon la revendication 1, caractérisé en ce que les moyens de reconnaissance (43) comportent un registre à décalage (15) comportant k étages, pour stocker et décaler la suite des bits d'information, un registre à mémoire (25) ayant k étages pour stocker la séquence de référence, et un détecteur de coïncidence (17) connecté aux k sorties du registre à décalage (15) et aux k sorties du registre à mémoire (25) pour comparer bit à bit les états logiques de ces sorties et générer un signal logique quand les k bits stockés dans le registre à décalage (15) sont identiques aux k bits stockés dans le registre à mémoire (25).

3. Dispositif de mesure selon la revendication 1, caractérisé en ce que la séquence de référence est constituée de k bits de même valeur logique, les moyens de reconnaissance (43) comportant un compteur délivrant le signal de commande, compteur avançant d'un pas à chaque bit ayant ladite valeur logique et revenant à zéro à chaque bit de valeur inverse et après comptage de k bits successifs ayant ladite valeur logique.

4. Dispositif de mesure selon l'une quelconque des revendications 1 à 3, caractérisé en ce que les moyens de transmission (45) des bits de parité comportent un modulateur de fréquence (2), recevant sur une première entrée (3) la suite des bits de parité et sur une deuxième entrée un signal périodique de fréquence fixe déterminant le rythme de transmission des informations, pour moduler ce rythme.

5. Dispositif de mesure selon l'une quelconque des revendications 1 à 3 où les moyens de liaison comportent, à l'émission, un modulateur de fréquence (2) pour moduler un signal de fréquence fixe qui définit, à une constante près la fréquence porteuse d'émission, par un signal issu d'un coupleur (4) multiplexant des signaux d'exploitation reçus sur une borne d'entrée (6) et la suite des bits de parité fournie par les moyens (22) générateurs de bit de parité.

6. Dispositif de mesure selon l'une quelconque des revendications 1 à 5, caractérisé en ce que le dispositif de commande (44) des moyens (22) générateurs du bit de parité comportent un dispositif de temporisation (21) pour transmettre le signal logique issu du détecteur de coïncidence (17) si et seulement si l'intervalle de temps écoulé depuis la précédente coïncidense est supérieur à une durée fixe, égale à la période minimale souhaitée pour la génération du bit de parité.

7. Equipement de transmission numérique comportant au moins un émetteur et un récepteur munis d'un dispositif de mesure selon l'une quelconque des revendications 1 à 6.

**Patentansprüche**

1. Messvorrichtung der Art einer numerischen Verbindung, die an der Ausgabe und an der Eingabe einschliesst:

– Paritätsbit-Erzeugermittel (22) für jede Folge einer festen Zahl n von aufeinanderfolgenden, zu übertragenden Informationsbits, wobei n eine ganze positive Zahl ist,

– eine Steuervorrichtung (44) der Erzeugermittel, die den Beginn des Inbetrachtziehens einer jeden Folge bestimmt,

und zusätzlich an der Ausgabe Übertragungsmittel für Paritätsbits (45) vorsieht, sowie am Empfang einen Detektor (39) der Übereinstimmung von Paritätsbits, die lokal erzeugt werden, und der übertragenen Paritätsbits, dadurch gekennzeichnet, dass die Steuervorrichtung (44) Erkennungsmittel (43) zur Erzeugung eines logischen Signals einschliesst, wenn die k letzten übertragenen Informationsbits mit einer Referenzfolge, die aus k Bits besteht, identisch sind, wobei k eine ganze Zahl ist, als eine Funktion der mittleren gewünschten Frequenz zufälliger Erscheinungen dieses Wortes von k Bits in der Folge der Informationsbits; und dadurch, dass die Übertragungsmittel (45) der Paritätsbits die Folge der Informationsbits nicht modifizieren.

2. Messvorrichtung gemäss Anspruch 1, dadurch gekennzeichnet, das die Erkennungsmittel (43) ein Verschiebungsregister (15) einschliessen, das k Stufen zum Speichern und Verschieben der Informationsbits hat, ein Speicherregister (25), das k Stufen zum Speichern der Referenzfolge hat, und einen Übereinstimmungsdetektor (17), der mit k Ausgaben des Verschiebungsregisters (15) und mit k Ausgaben des Speicherregisters (25) verbunden ist, um Bit für Bit den logischen Zustand der genannten Ausgaben zu vergleichen und ein logisches Signal zu erzeugen, wenn die k Bits, die in dem Verschiebungsregister (15) gespeichert sind, mit den k Bits identisch sind, die im Speicherregister (25) gespeichert sind.

3. Messvorrichtung gemäss Anspruch 1, dadurch gekennzeichnet, dass die Referenzfolge aus k Bits des gleichen logischen Wertes besteht, die Erkennungsmittel (43) einen Zähler einschliessen, der das Steuersignal erzeugt, wobei der genannte Zähler einen Schritt bei jedem Bit weiterrückt, das einen logischen Wert hat, und bei jedem negierten Wert auf Null zurückgeht und nach dem Zählen von k aufeinanderfolgenden Bits, die den genannten logischen Wert haben.

4. Messvorrichtung gemäss einem der Ansprüche 1 bis 3, dadurch gekennzeichnet, dass die Übertragungsmittel (45) der Paritätsbits einen Frequenzwandler einschliessen, der an einer ersten Eingabe die Folge der Paritätsbits und an einer zweiten Eingabe ein festes periodisches Frequenzsignal empfängt, das die Übertragungszeitgabe der Information bestimmt, um die Zeitgabe zu modulieren.

5. Messvorrichtung gemäss einem der Ansprüche 1 bis 3, worin die Verbindungsmittel umfassen: einen Frequenzwandler (2) an der Ausgabe, um ein festes Frequenzsignal zu modulieren, das einer Konstanten nahe der Ausgabeträgerfrequenz, durch ein Signal von einem multiplex operierenden Unterbrecherkontakt (4), Betriebssignale definiert, die an der Eingabeklemme (6) empfangen werden, und die Folge von Paritätsbits, die durch die Erzeugungsmittel (22) der Paritätsbits erzeugt werden.

6. Messvorrichtung gemäss einem der Ansprüche 1 bis 5, dadurch gekennzeichnet, dass die Steuermittel (44) des Paritätsbit Erzeugers (22) eine Verzögerungsvorrichtung (21) einschliessen, die der Übertragung des vom Übereinstimmungsdetektor (17) erzeugten logischen Signals dient, wenn, und nur wenn, die Zeitspanne, die seit der vorhergehenden Übereinstimmung verstrichen ist, grösser ist als die feste Dauer, die der minimalen Periode gleich ist, die für die Erzeugung von Paritätsbits erstrebt wird.

7. Numerisches Übertragungsgerät, das mindestens eine Ausgabe und eine Eingabe mit einer Messvorrichtung gemäss einem der Ansprüche 1 bis 6 einschliesst.

## Claims

1. Measuring device of the type of a numerical connector comprising at the output and at the input:
- generator means (22) of a parity bit for each sequence of a fixed number n of successive information bits for transfer, with n being a positive integer,
- a control device (44) of the generator means (22) determining the beginning of taking each sequence into account,
  and comprising in addition, at the output, transfer means for parity bits (45) and at the input a detector (39) of the coincidence of parity bits which are created locally and of the transferred parity bits,

characterized in that the control device (44) comprises recognition means (43) for supplying a logic signal when the k last information bits transferred are identical to a reference sequence composed of k bits, where k is a whole number as a function of the median desired frequency of random appearances of this word of k bits in the sequence of information bits, and in that the transfer means (45) of the parity bits do not modify the sequence of the information bits.

2. Measuring device according to claim 1, characterized in that the recognition means (43) comprise a shift register (15) having k stages for storing and shifting the sequence of information bits, a storage register (25) having k stages for storing the reference sequence, and a coincidence detector (17), connected to k outputs of the shift register (15) and to k outputs of the storage register (25) for comparing bit by bit the logic states of said outputs and to create a logic signal when the k bits stored in the shift register (15) are identical to k bits stored in the storage register (25).

3. Measuring device according to claim 1, characterized in that the reference sequence consists of k bits of the same logic value, the recognition means (43) comprise a counter supplying the control signal, with said counter advancing one step at each bit having said logic value and returning to zero at each bit of logic value and after counting k successive bits having said logic value.

4. Measuring device according to one of claims 1 to 3, characterized in that the transfer means (45) of parity bits comprise a frequency modulator, receiving on a first input the sequence of parity bits and on a second input a fixed periodic frequency signal which determines the transfer clock of information, to modulate said clock.

5. Measuring device according to one of claims 1 to 3, wherein the connector means comprise at the output a frequency modulator (2) to modulate a fixed frequency signal which defines, at a constant, close to the output carrier frequency, by a signal issued from a multiplexing make-and-brake contact (4), operating signals received at an input terminal (6) and the sequence of parity bits supplied by the generator means (22) of parity bits.

6. Measuring device according to one of claims 1 to 5, characterized in that the control device (44) of the parity bit generator means (22) comprises a time-delay device (21) for transferring the logic signal issued by the coincidence detector (17) when, and only when, the span of time passed since the preceding coincidence is superior to a fixed duration, equal to the minimal period wanted for the generation of the parity bit.

7. Numerical transfer equipment comprising at least one output and one input means provided with a measuring device according to one of the claims 1 to 6.

FIG_1

FIG_2